# EUROPEAN PATENT APPLICATION

(11) **EP 4 464 167 A1**
(43) Date of publication of application: **20.11.2024**
(21) Application number: 23173988.9
(22) Date of filing: 17.05.2023
(51) Int. Cl.: A23K 20/24, A23K 40/25, A23K 50/80, A23K 40/20

(54) **BINDER FOR ANIMAL FEED PELLETS**

(71) Applicant: Borregaard AS, 1721 Sarpsborg (NO)
(72) Inventor: The designation of the inventor has not yet been filed
(74) Representative: Wallinger Ricker Schlotter Tostmann

(57) **Abstract**

The present invention relates to a process for the manufacture of animal feed pellets, comprising the following steps: a)providing a feed mixture comprising feed ingredients, b)combining the feed mixture with a binder system comprising calcium hydroxide, thereby obtaining an animal feed composition, c) subjecting the animal feed composition obtained in step b) to steam and heating the animal feed composition to a temperature of at least 80 °C, d) pelleting the mixture obtained in step c) to obtain animal feed pellets. Further, the present invention relates to a method for reducing the energy consumption during a pelleting step in the manufacture of animal feed pellets and to a method for increasing the water stability of animal feed pellets. Moreover, the present invention relates to the use of calcium hydroxide for reducing the energy consumption during a pelleting step in the manufacture of animal feed pellets, and to the use of calcium hydroxide for increasing the water stability of animal feed pellets. Furthermore, the present invention relates to animal feed pellets, such as those obtained by the inventive process.

## Description

### FIELD OF THE INVENTION

The present invention relates to the use of calcium hydroxide, preferably in combination with lignosulfonate, as a binder for animal feed pellets. In particular, the present invention relates to the use of calcium hydroxide, preferably in combination with lignosulfonate, for improving the water-stability of animal pellets and the energy-efficiency of a process for preparing the same.

### BACKGROUND OF THE INVENTION

Pelletized feeds are nowadays widely used for feeding all different kinds of animals. The primary advantage of feeding pelletized feeds is that a selective intake of more palatable feed components can be avoided, thereby contributing to a balanced diet. Further advantages are (i) the prevention of a segregation of different feed constituents during storage, shipping, or handling, and (ii) a high bulk density resulting in a spacesaving storage and transport.

Production of feed pellets for aquatic animals has some unique challenges. Mainly, when the pellet encounters water, it must sustain its integrity to ensure that the animal can efficiently consume the feed and thrive off the nutrients. In aquaculture it is important that the water stability of the feed pellets is tailored to suit the marine specie feeding on the pellet. Having the correct properties will result in higher utilization of the feed components, and at the same time avoiding a loss of valuable feed material into the aqueous phase by dissolution or pulverization phenomena over time. In general, water-stable feed pellets are produced by treating a feed mixture comprising different feed ingredients, such as soybean meal, wheat flour, fish meal, minerals etc., with a suitable binder to enhance the water stability. In many instances, the component responsible for increased water stability of the feed pellets is composed of urea-formaldehyde. Binders based on urea-formaldehyde, however, are both costly and subject to increased regulatory concerns in many regions. Thus, it is desired to replace urea formaldehyde binders by other binders, in particular non-toxic and environmentally benign binders.

For manufacturing feed pellets, an extrusion operation in which a wet feed mixture is formed into pellets by pressing it through a die is generally used. As the feed mixture is forced through the die, the material compacts and forms a pellet. Normally, to produce a high-quality pellet, it is required to use a high amount of mechanical energy to push the feed mixture through the die. It is generally desired to perform the pelleting process in an energy-efficient manner, and, in particular, it is desired to lower the mechanical energy consumption during the pelleting process. The amount of mechanical energy used not only depends on the setup of the extruder, such as the die speed, the ratio of die working area to power, the die specification, the drive arrangements, but also on the feed mixture to be forced through the die. Energy efficiency of the pelleting process means producing pellets of good physical quality at optimum ratio of output to energy consumption by the extruder, defined as amount of mechanical energy (kWh) used to produce one metric ton of pellets (kWh/MT). An energy-efficient pelleting process, however, cannot be achieved by simply running the extruder at the lowest possible amps, or at the maximum possible output. Very often, the pellet quality deteriorates if simply the lowest possible amps or the maximum possible output is chosen. It is rather very often required to utilize suitable pelleting aids for achieving the most economical combination of the two factors (i.e. amps and output) while still maintaining the required pellet quality. Also, it is desired to achieve a stable AC current with no or only low fluctuations during the pelleting process.

### SUMMARY OF THE PRESENT INVENTION

It is an object of the present invention to achieve all or some of the above-mentioned purposes.

In particular, it is an object of the present invention to provide for high-quality, water-stable feed pellets that can be produced in an energy-efficient manner. It is also an object of the present invention to provide for a process for producing such feed pellets in an energy-efficient manner.

These and other objects have been achieved by the claimed process for the manufacture of animal feed pellets. In particular, the inventors of the present invention have found that while commonly used urea-formaldehyde binders (which are undesired from an ecological and regulatory point of view) achieve a sufficient water-stability, they lead to a rather high energy consumption and a considerably fluctuating AC current during the extrusion process.

The inventors of the present invention have further found that calcium hydroxide (Ca(OH)₂) possesses a double function in an animal feed pelleting process. In particular, it has been found that calcium hydroxide not only acts as a binder which increases the water-stability of the pellets, but also acts as a lubricant which lowers the energy consumption during the pelleting process. Further, it has been found that calcium hydroxide stabilizes the AC current during pelletization. Moreover, it has been found that when calcium hydroxide is used as a binder, the addition of lignosulfonate leads to a more efficient pelleting process with lower energy consumption and to pellets with higher durability.

In a ***first aspect***, the present invention relates to a process for the manufacture of animal feed pellets.

In a ***second aspect***, the present invention relates to a method for reducing the energy consumption during a pelleting step in the manufacture of animal feed pellets.

In a ***third aspect***, the present invention relates to a method for increasing the water stability of animal feed pellets.

In a ***fourth aspect***, the present invention relates to the use of calcium hydroxide for reducing the energy consumption during a pelleting step in the manufacture of animal feed pellets.

In a ***fifth aspect***, the present invention relates to the use of calcium hydroxide for increasing the water stability of animal feed pellets.

In a ***sixth aspect***, the present invention relates to animal feed pellets, obtained by the process of the present invention.

In a ***seventh aspect***, the present invention relates to animal feed pellets, comprising a) feed ingredients, and b) a binder system comprising calcium hydroxide.

### DETAILED DESCRIPTION OF THE INVENTION

As noted above, the present invention is based on the surprising finding that calcium hydroxide possesses a double function in an animal feed pelleting process, i.e. it acts as a binder improving the water-stability of the feed pellets, and at the same time acts as a processing aid lowering the energy consumption and stabilizing the AC current during the pelleting process. As noted above, an improved water stability is particularly desired for aquatic animal feeds.

Typical ingredients of aquatic animal feeds are protein sources, lipid sources, carbohydrate sources, vitamin and mineral supplements, and additives.

Exemplary protein sources are fish meal, soybean meal, and corn gluten meal. Exemplary lipid sources are fish oil, soybean oil, and corn oil.

Exemplary carbohydrate sources are wheat, corn, and rice. Exemplary vitamins and mineral supplements are vitamin C, vitamin E, and phosphorous. Calcium is also an exemplary mineral supplement and is typically provided in the form of dicalcium phosphate or calcium carbonate.

While calcium hydroxide is also a theoretical calcium source, it is not commonly used in aquatic feeds as it can raise the pH of the water. Low amounts of calcium hydroxide, however, are tolerable.

In the context of the present invention, calcium hydroxide is solely considered as a binder and not as a feed ingredient or a part of the feed mixture. Also, if it is defined herein that calcium hydroxide is used in a certain amount, this amount refers to the total amount of all calcium hydroxide present, irrespective whether it is described as a binder or as a feed ingredient.

Additives may be included to improve the palatability, digestibility, or to control diseases. Exemplary additive are probiotics, prebiotics, and immunostimulants.

In a ***first aspect***, the present invention relates to a process for the manufacture of animal feed pellets. The process comprises the following steps:
a) providing a feed mixture comprising feed ingredients,
b) combining the feed mixture with a binder system comprising calcium hydroxide, thereby obtaining an animal feed composition,
c) subjecting the animal feed composition obtained in step b) to steam and heating the animal feed composition to a temperature of at least 80 °C,
d) pelleting the mixture obtained in step c) to obtain animal feed pellets.

In the context of the present invention, step c) of the inventive method is also referred to as "pre-conditioning", a "pre-conditioning step", or the like. Pre-conditioning of the feed composition can increase the quality of the pellet. The pre-conditioning process can gelatinize starch in grains and make crystalline structure of starch available for enzymatic reactions, which lead to better nutrient digestibility at animal level.

In step c), "subjecting [...] to steam" and "heating" is not intended to refer to two separate steps or measures to be performed. Usually, the "heating" is the result of the exposure to steam. No separate heating measures are usually required.

It has been found that pre-conditioning step c) affects the quality and properties of the resulting feed pellets. In particular, it has surprisingly been found that higher temperatures in the pre-conditioning step c) result in pellets having an improved water-stability. In step c), the animal feed composition is preferably heated to a temperature of at least 85 °C, more preferably at least 88 °C, even more preferably at least 90 °C, even more preferably at least 92 °C. In this way, a sufficient water stability can be achieved even in the absence of an additional heating step, which has been shown to further improve the water-stability (see below). The additional heating step will be discussed as step e) further down below. Also, it has been found that feed ingredients of a usual feed mixture do not decompose at such pre-conditioning temperatures. Preferably, in step c), the animal feed composition is heated to a temperature of 80 to 120 °C, preferably 85 to 120 °C, more preferably, 88 to 120 °C, even more preferably 90 to 120 °C, even more preferably 90 to 110 °C, even more preferably 92 to 110 °C, even more preferably 92 to 105 °C, even more preferably 92 to 100 °C. According to another preferred embodiment, the animal feed composition is heated to a temperature of 88 to 100 °C, preferably 90 to 100 °C.

Preferably, step c) is performed for a duration of at least 10 s, preferably at least 15 s, more preferably at least 60 s. It has been found that such durations are advantageous for achieving the desired water stability. In particular, step c) is preferably performed for a duration of 5-400 s, preferably 15-200 s, more preferably 60-120 s.

Preferably, the animal feed composition obtained in step c) has a water content of 11-21 wt.%, preferably 13-19 wt.%, more preferably 16.2-18.2 wt.%, based on the weight of the feed composition obtained in step c). The water content can be determined by Karl Fischer titration.

Preferably, the process further comprises an additional step e), which is performed after step d) and comprises heating the pellets at a temperature of at least 90 °C, preferably at least 100 °C, more preferably at least 110 °C, more preferably at least 120 °C, more preferably at least 125 °C, more preferably at least 130 °C. Preferably, step e) comprises heating the pellets at a temperature of 90 to 160 °C, preferably 100 to 150 °C, more preferably 110 to 150 °C, more preferably 110 to 140 °C, more preferably 120 to 140 °C, more preferably 125 to 145 °C.

Step e) is preferably performed for a duration of 5 minutes to 5 hours, preferably 10 minutes to 4 hours, more preferably 10 minutes to 3 hours, more preferably 10 minutes to 2 hours, more preferably 10 minutes to 1 hour, more preferably 10 to 40 minutes, more preferably 20 to 40 minutes.

It is particularly preferred that step e) comprises heating the pellets at a temperature of 125 to 145 °C and for a duration of 10 to 40 minutes.

Step e) is preferably performed at atmospheric pressure.

Preferably, step e) comprises heating the pellets at a temperature and time sufficient to achieve a water content of less than 13 wt.%, more preferably less than 12 wt.%, even more preferably less than 10 wt.%, based on the total weight of the pellets.

It has surprisingly been found that a post-pelletization heating step can quite significantly improve the water-stability. For example, it has been found that if the water-stability after step d) is not sufficient (for example because a lower pre-conditioning temperature has been used in step c)), the water-stability can be improved by applying an additional heating step after the pelleting step. Even more, it has been found that even if a higher pre-conditioning temperature is used in step c), thereby resulting in a higher water-stability after step d), the water-stability can still be improved by applying an additional heating step.

Preferably, no cooling step is performed between steps d) and e). It is to be understood that such cooling step includes active cooling such as air blowing as well as passive cooling such as simply storing the pellets at ambient temperature. It is particularly preferred that the pellets are not cooled to room temperature (20 °C) between steps d) and e). It is further preferred that the temperature does not decrease by more than 10 °C between steps d) and e). Preferably, the temperature does not decrease by more than 5 °C between steps d) and e). More preferably, the temperature does not decrease by more than 3 °C between steps d) and e).

The resulting animal feed pellets preferably have a water content of 7-15 wt.%, preferably 9-13 wt.%, more preferably 10-12 wt.%, based on the total weight of the animal feed pellets.

The animal feed pellets are preferably aquatic animal feed pellets.

Preferably, in step b) the calcium hydroxide is used in an amount of more than 0.3 wt.% to 2.5 wt.%, more preferably in an amount of more than 0.3 wt.% to 2.0 wt.%, more preferably in an amount of more than 0.3 wt.% to 1.5 wt.%, more preferably in an amount of more than 0.3 wt.% to 1.2 wt.%, more preferably in an amount of more than 0.3 wt.% to 1.0 wt.%, based on the total weight of the feed mixture and the binder system. An amount of "more than 0.3 wt.% to 2.5 wt.%" may also be described as an amount "x", wherein 0.3 wt.% < x ≤ 2.5 wt.%. According to another preferred embodiment, in step b) the calcium hydroxide is present in an amount of 0.4 to 2.5 wt.%, based on the total weight of the feed mixture and the binder system, preferably in an amount of 0.4 to 2.0 wt.%, more preferably in an amount of 0.4 to 1.5 wt.%, more preferably in an amount of 0.4 to 1.2 wt.%, more preferably in an amount of 0.4 to 1.0 wt.%. According to another preferred embodiment, in step b) the calcium hydroxide is present in an amount of 0.9 to 2.5 wt.%, based on the total weight of the feed mixture and the binder system, preferably 0.9 to 2.0 wt.%, more preferably 0.9 to 1.5 wt.%, more preferably 0.9 to 1.2 wt.%, more preferably 0.9 to 1.0 wt.%.

The amount of calcium hydroxide in the final animal feed pellets is preferably more than 0.3 wt.% to 2.5 wt.%, more preferably more than 0.3 wt.% to 2.0 wt.%, more preferably more than 0.3 wt.% to 1.5 wt.%, more preferably more than 0.3 wt.% to 1.2 wt.%, more preferably more than 0.3 wt.% to 1.0 wt.%, based on the total weight of the animal feed pellets. Again, an amount of "more than 0.3 wt.% to 2.5 wt.%" may also be described as an amount "x", wherein 0.3 wt.% < x ≤ 2.5 wt.%. According to another preferred embodiment, the amount of calcium hydroxide in the final animal feed pellets is 0.4 to 2.5 wt.%, based on the total weight of the animal feed pellets, preferably 0.4 to 2.0 wt.%, more preferably 0.4 to 1.5 wt.%, more preferably 0.4 to 1.2 wt.%, more preferably 0.4 to 1.0 wt.%. According to another preferred embodiment, the amount of calcium hydroxide in the final animal feed pellets is 0.9 to 2.5 wt.%, preferably 0.9 to 2.0 wt.%, more preferably 0.9 to 1.5 wt.%, more preferably 0.9 to 1.2 wt.%, more preferably 0.9 to 1.0 wt.%, based on the total weight of the animal feed pellets.

It has been found that when calcium hydroxide is used in such amounts, a good water-stability and a large reduction in the mechanical energy required for the pelleting step can be achieved at the same time. In particular, it has been found that an amount of more than 0.3 wt.% of calcium hydroxide is advantageous for rendering the pelleting process smooth and energy efficient. Calcium hydroxide amounts of more than 2.5 wt.% are considered to be less cost efficient.

The binder system may further comprise lignosulfonate and/or magnesium hydroxide and/or magnesium oxide. According to another embodiment, the binder system consists of calcium hydroxide. In such embodiment, the inventive process may be described as a process for the manufacture of animal feed pellets, comprising the following steps: a) providing a feed mixture comprising feed ingredients; b) combining the feed mixture with calcium hydroxide, thereby obtaining an animal feed composition; c) subjecting the animal feed composition obtained in step b) to steam and heating the animal feed composition to a temperature of at least 80 °C; d) pelleting the mixture obtained in step c) to obtain animal feed pellets.

According to a preferred embodiment, the binder system further comprises lignosulfonate. As described in more detail in the examples section below, it has been found that when calcium hydroxide is used as a binder, the addition of lignosulfonate gave a more efficient pelleting process with lower energy consumption and to pellets with higher durability. Hence a combination of calcium hydroxide and lignosulfonate is particularly preferred.

Lignosulfonate is obtained when lignin, respectively, lignin-containing cellulosic biomass (also including "Kraft lignin", i.e. cellulosic biomass that has been subjected to the Kraft pulping process) is subjected to sulfite cooking. Thus, lignosulfonate may be described as the organic salt product recovered from digestion of wood, e.g. acid or basic sulfite pulping with sulfurous acid (salts). Preferred lignosulfonates can thus be described as anionic polyelectrolyte polymers. Hence, the term "lignosulfonate", as used within the context of the present application, refers to any lignin derivative which is formed during sulfite pulping of lignin-containing material, such as, e.g., wood, in the presence of, for example, sulfur dioxide and sulfite ions, respectively, bisulfite ions. For example, during the acidic sulfite pulping of lignin-based material, electrophilic carbon cations in the lignin are produced which are a result of the acid catalyzed ether cleavage. Thus, lignin may react, via these carbo-cations, with the sulfite, respectively, bisulfite ions under the formation of lignosulfonates.

"Sulfite pulping" is generally known in the art of wood/plant material processing. Sulfite pulping may be advantageously used for converting almost pure cellulose fibers from lignocellulosic biomass (i.e. plant matter) into wood pulp. This "pulping" is typically achieved by extracting lignin from lignocellulosic biomass in large pressure vessels called digesters by using various salts of sulfurous acid. During sulfite pulping, lignin molecules are sulfonated and thereby rendered negatively charged and generally water-soluble. In sulfite pulping, sulfonate groups are generally introduced at the aliphatic moieties of lignin, i.e. not at the aromatic moieties. Thus, lignosulfonate obtained from sulfite pulping does not or not significantly contain aromatic sulfonate groups but only or essentially only *aliphatic* sulfonate groups. In addition, carboxylate groups are introduced into native lignin during sulfite pulping.

In accordance with the present invention, "sulfite pulping" refers to the process of extracting or reacting native lignin or lignin from Kraft pulping, with at least one salt of sulfurous acid. The salts used in said pulping process are preferably sulfites (SO₃²⁻) or bisulfites (HSO₃⁻). As noted above, by way of sulfite pulping, sulfonate groups are generally introduced at the aliphatic moieties of lignin, i.e. not at the aromatic moieties.

As referred to herein, an "*aliphatic sulfonate group*" is a sulfonate group that is bound to an aliphatic carbon atom, i.e. a carbon atom that is not part of an aromatic ring. In contrast, an "*aromatic sulfonate group*", as referred to herein, is a sulfonate group that is bound to a carbon atom that is part of an aromatic ring.

As noted above, the inventors of the present invention have found that calcium hydroxide acts as a binder *and* as a lubricant, thereby increasing the water stability of the feed pellets, and at the same time lowering the energy consumption during the pelleting process. Further, the inventors have found that a drying step performed after the pelleting step further improves the water stability of the obtained feed pellets. Water stabilities of 90% or higher (expressed as dry matter remaining, %) can be obtained. Thus, it is preferred that the resulting animal feed pellets have a water stability of 70% or more, preferably 75% or more, more preferably 80% or more, more preferably 85% or more, more preferably 87% or more, more preferably 88% or more, even more preferably 90% or more, wherein the water stability is determined as set out hereinbelow.

In a preferred embodiment, pelleting step d) is performed at a temperature of at least 85 °C, preferably at least 90 °C. It is particularly preferred that the pelleting step d) is performed at a temperature of 80 to 120 °C, preferably 80 to 110 °C, more preferably, 85 to 105 °C, more preferably 90 to 100 °C, more preferably 90 to 97 °C, more preferably 93 to 95 °C.

Further, the pelleting step d) is preferably performed at a pressure of at least 1 atm, preferably at least 2 atm, more preferably at least 3 atm.

The process is most efficiently performed by directly pelleting the mixture obtained in step c). This is means that preferably no other step is performed between steps c) and d).

The calcium hydroxide can be used in solid form or in the form of a liquid slurry. Hence, in one embodiment, the calcium hydroxide is mixed with the feed mixture in solid form. In another embodiment, the calcium hydroxide is mixed with the feed mixture in the form of a liquid slurry. If the calcium hydroxide is used in solid form, it can be used in the form of granules.

As noted above, aquatic feeds are typically formulated using a combination of feed ingredients such as protein sources and optionally other ingredients, such as carbohydrate sources, grains, vitamins, and minerals. Excessive amounts of any ingredient, however, can contribute to water pollution.

For example, while phosphates are nutrients for animals, including aquatic animals, excessive amounts of phosphates can lead to water pollution and harm aquatic life. For example, phosphates can lead to the overgrowth of algae and other aquatic plants, which can deplete oxygen levels and harm other aquatic organisms. Therefore, it is important to regulate the amount of phosphate added to aquatic feeds. For this reason, aquatic feeds that rely on reactive phosphate sources as a part of the binder system may cause water pollution. Hence, it is generally desired to not add separate phosphate sources apart from commonly used phosphate-containing feed ingredients such as fish meal, soybean meal, corn gluten meal, and the like. In particular, by using calcium hydroxide as the binder, the use of separate phosphate sources, which are sometimes used as a component of a binder system, can be avoided. Hence, it is preferred that neither the feed mixture nor the binder system comprises a separate phosphate source. In particular, it is preferred that neither the feed mixture nor the binder system comprises phosphoric acid, ammonium polyphosphate, monoammonium phosphate, diammonium phosphate, monopotassium phosphate, dipotassium phosphate, monosodium phosphate, monocalcium phosphate, disodium phosphate, or combinations thereof.

While some feed compositions comprise corn syrup solids, corn syrup is not considered as a suitable source of protein or other essential nutrients required by aquatic animals. Thus, the use of corn syrup solids in aquatic feeds should be limited or avoided. Accordingly, it is preferred that no corn syrup solids are used in the present invention.

In a ***second aspect***, the present invention relates to a method for reducing the energy consumption during a pelleting step in the manufacture of animal feed pellets, the method comprising the use of calcium hydroxide.

The fact that calcium hydroxide effectively reduces the energy consumption during a pelleting step in the manufacture of animal feed pellets has not been known before the present invention was made.

It has been found that the energy consumption can be reduced by 2% or even more. Thus, preferably, the energy consumption during the pelleting step is reduced by at least 2%, preferably at least 6%, more preferably at least 10%, as compared to an identical process that does not use calcium hydroxide.

It is to be understood that all preferred embodiments set out in the context of the first aspect also apply for the second aspect, if applicable. For example, the calcium hydroxide is preferably used in an amount as set out in the context of the first aspect. Further, the pelleting step is preferably performed at a temperature and/or pressure as set out in the first aspect. Also, the animal feed pellets are preferably defined as set out in the first aspect. For example, it is to be understood that the manufacture of the animal feed pellets preferably comprises steps a) to d) as defined in the first aspect. As described in the first aspect, the manufacture may further comprise a heating step e).

In a ***third aspect***, the present invention relates to a method for increasing the water stability of animal feed pellets, the method comprising the use of calcium hydroxide.

In line with what has been clarified for the second aspect, it is to be understood that all preferred embodiments set out in the context of the first aspect also apply for the third aspect, if applicable. For example, the method preferably comprises manufacturing the animal feed pellets by a method comprising the following steps a) to d) as defined in the first aspect. Again, as described in the first aspect, the method may further comprise a heating step e).

Preferably, the water stability is increased by at least 2%, preferably at least 6%, more preferably at least 10%, as compared to identical animal feed pellets that do not comprise calcium hydroxide.

In a ***fourth aspect***, the present invention relates to the use of calcium hydroxide for reducing the energy consumption during a pelleting step in the manufacture of animal feed pellets.

Once again, it is to be understood that all preferred embodiments set out in the context of the first aspect also apply for the fourth aspect, if applicable.

For example, the calcium hydroxide is preferably used in a process as described in the context of the first aspect, i.e. a process comprising steps a) to d) as defined in the first aspect.

In a ***fifth aspect***, the present invention relates to the use of calcium hydroxide for increasing the water stability of animal feed pellets.

Once again, it is to be understood that all preferred embodiments set out in the context of the first aspect also apply for the fifth aspect, if applicable.

For example, the calcium hydroxide is preferably used in a process as described in the context of the first aspect.

In a ***sixth aspect***, the present invention relates to animal feed pellets, obtained by the process of the present invention.

Once again, it is to be understood that all preferred embodiments set out in the context of the first aspect also apply for the sixth aspect, if applicable.

In a ***seventh aspect***, the present invention relates to animal feed pellets, comprising a) feed ingredients, and b) a binder system comprising calcium hydroxide.

Once again, it is to be understood that all preferred embodiments set out in the context of the first aspect also apply for the seventh aspect, if applicable.

The present invention is now further described by means of the following items:
1. Process for the manufacture of animal feed pellets, comprising the following steps:
   a) providing a feed mixture comprising feed ingredients,
   b) combining the feed mixture with a binder system comprising calcium hydroxide, thereby obtaining an animal feed composition,
   c) subjecting the animal feed composition obtained in step b) to steam and heating the animal feed composition to a temperature of at least 80 °C,
   d) pelleting the mixture obtained in step c) to obtain animal feed pellets.
2. The process according to item 1, wherein in step c), the animal feed composition is heated to a temperature of at least 85 °C, preferably at least 88 °C, more preferably at least 90 °C, even more preferably at least 92 °C.
3. The process according to item 1 or 2, wherein in step c), the animal feed composition is heated to a temperature of 80 to 120 °C, preferably 85 to 120 °C, more preferably, 88 to 120 °C, even more preferably 90 to 120 °C, even more preferably 90 to 110 °C, even more preferably 92 to 110 °C, even more preferably 92 to 105 °C, even more preferably 92 to 100 °C.
4. The process according to item 1 or 2, wherein in step c), the animal feed composition is heated to a temperature of 88 to 100 °C, preferably 90 to 100 °C.
5. The process according to any one of the preceding items, wherein step c) is performed for a duration of at least 10 s, preferably at least 15 s, more preferably at least 60 s.
6. The process according to any one of the preceding items, wherein step c) is performed for a duration of 5-400 s, preferably 15-200 s, more preferably 60-120 s.
7. The process according to any one of the preceding items, wherein the animal feed composition obtained in step c) has a water content of 11-21 wt.%, preferably 13-19 wt.%, more preferably 16.2-18.2 wt.%, based on the weight of the feed composition obtained in step c).
8. The process according to any one of the preceding items, further comprising step e), wherein step e) is performed after step d), and wherein step e) comprises heating the pellets at a temperature of at least 90 °C, preferably at least 100 °C, more preferably at least 110 °C, more preferably at least 120 °C, more preferably at least 125 °C, more preferably at least 130 °C.
9. The process according to item 8, wherein step e) comprises heating the pellets at a temperature of 90 to 160 °C, preferably 100 to 150 °C, more preferably 110 to 150 °C, more preferably 110 to 140 °C, more preferably 120 to 140 °C, more preferably 125 to 145 °C.
10. The process according to item 8 or 9, wherein step e) comprises heating the pellets for a duration of 5 minutes to 5 hours, preferably 10 minutes to 4 hours, more preferably 10 minutes to 3 hours, more preferably 10 minutes to 2 hours, more preferably 10 minutes to 1 hour, more preferably 10 to 40 minutes, more preferably 20 to 40 minutes.
11. The process according to any one of items 8-10, wherein step e) comprises heating the pellets at a temperature of 125 to 145 °C and for a duration of 10 to 40 minutes.
12. The process according to any one of items 8-12, wherein step e) is performed at atmospheric pressure.
13. The process according to any one of items 8-12, wherein step e) comprises heating the pellets at a temperature and time sufficient to achieve a water content of less than 13%, preferably less than 12%, more preferably less than 10%.
14. The process according to any one of items 8-13, wherein no cooling step is performed between steps d) and e).
15. The process according to any one of items 8-14, wherein the pellets are not cooled to room temperature (20 °C) between steps d) and e).
16. The process according to any one of the preceding items, wherein the resulting animal feed pellets have a water content of 7-15 wt.%, preferably 9-13 wt.%, more preferably 10-12 wt.%, based on the total weight of the animal feed pellets.
17. The process according to any one of the preceding items, wherein the animal feed pellets are aquatic animal feed pellets.
18. The process according to any one of the preceding items, wherein in step b) the calcium hydroxide is used in an amount of more than 0.3 wt.% to 2.5 wt.%, more preferably in an amount of more than 0.3 wt.% to 2.0 wt.%, more preferably in an amount of more than 0.3 wt.% to 1.5 wt.%, more preferably in an amount of more than 0.3 wt.% to 1.2 wt.%, more preferably in an amount of more than 0.3 wt.% to 1.0 wt.%, based on the total weight of the feed mixture and the binder system.
19. The process according to any one of the preceding items, wherein in step b) the calcium hydroxide is present in an amount of 0.4 to 2.5 wt.%, based on the total weight of the feed mixture and the binder system, preferably in an amount of 0.4 to 2.0 wt.%, more preferably in an amount of 0.4 to 1.5 wt.%, more preferably in an amount of 0.4 to 1.2 wt.%, more preferably in an amount of 0.4 to 1.0 wt.%.
20. The process according to any one of the preceding items, wherein in step b) the calcium hydroxide is present in an amount of 0.9 to 2.5 wt.%, based on the total weight of the feed mixture and the binder system, preferably 0.9 to 2.0 wt.%, more preferably 0.9 to 1.5 wt.%, more preferably 0.9 to 1.2 wt.%, more preferably 0.9 to 1.0 wt.%.
21. The process according to any one of the preceding items, wherein the amount of calcium hydroxide in the final animal feed pellets is more than 0.3 wt.% to 2.5 wt.%, more preferably more than 0.3 wt.% to 2.0 wt.%, more preferably more than 0.3 wt.% to 1.5 wt.%, more preferably more than 0.3 wt.% to 1.2 wt.%, more preferably more than 0.3 wt.% to 1.0 wt.%, based on the total weight of the animal feed pellets.
22. The process according to any one of the preceding items, wherein the amount of calcium hydroxide in the final animal feed pellets is 0.4 to 2.5 wt.%, based on the total weight of the animal feed pellets, preferably 0.4 to 2.0 wt.%, more preferably 0.4 to 1.5 wt.%, more preferably 0.4 to 1.2 wt.%, more preferably 0.4 to 1.0 wt.%.
23. The process according to any one of the preceding items, wherein the amount of calcium hydroxide in the final animal feed pellets is 0.9 to 2.5 wt.%, based on the total weight of the animal feed pellets, preferably 0.9 to 2.0 wt.%, more preferably 0.9 to 1.5 wt.%, more preferably 0.9 to 1.2 wt.%, more preferably 0.9 to 1.0 wt.%.
24. The process according to any one of the preceding items, wherein the binder system further comprises lignosulfonate and/or magnesium hydroxide and/or magnesium oxide, preferably the binder system further comprises lignosulfonate.
25. The process according to any one of items 1-23, wherein the binder system consists of calcium hydroxide.
26. The process according to any one of the preceding items, wherein the resulting animal feed pellets have a water stability of 70% or more, preferably 75% or more, more preferably 80% or more, even more preferably 85% or more, even more preferably 87% or more, even more preferably 88% or more, even more preferably 90% or more, wherein the water stability is determined as set out in the description.
27. The process according to any one of the preceding items, wherein the pelleting step d) is performed at a temperature of at least 85 °C, preferably at least 90 °C.
28. The process according to any one of the preceding items, wherein the pelleting step d) is performed at a temperature of 80 to 120 °C, preferably 80 to 110 °C, more preferably, 85 to 105 °C, more preferably 90 to 100 °C, more preferably 90 to 97 °C, more preferably 93 to 95 °C.
29. The process according to any one of the preceding items, wherein the pelleting step d) is performed at a pressure of at least 1 atm, preferably at least 2 atm, more preferably at least 3 atm.
30. The process according to any one of the preceding items, wherein no other step is performed between steps c) and d).
31. The process according to any one of the preceding items, wherein the calcium hydroxide is used in solid form.
32. The process according to any one of items 1-30, wherein the calcium hydroxide is used in the form of a liquid slurry.
33. The process according to item 31, wherein the calcium hydroxide is used in the form of granules.
34. The process according to any one of the preceding items, wherein the feed mixture and the binder system do not comprise phosphoric acid, ammonium polyphosphate, monoammonium phosphate, diammonium phosphate, monopotassium phosphate, dipotassium phosphate, monosodium phosphate, monocalcium phosphate, disodium phosphate, or combinations thereof.
35. The process according to any one of the preceding items, wherein no corn syrup solids are used.
36. Method for reducing the energy consumption during a pelleting step in the manufacture of animal feed pellets, the method comprising the use of calcium hydroxide.
37. The method according to item 36, wherein the energy consumption during the pelleting step is reduced by at least 2%, preferably at least 6%, more preferably at least 10% as compared to an identical process that does not use calcium hydroxide.
38. The method according to item 36 or 37, wherein the manufacture of the animal feed pellets comprises the following steps:
   a) providing a feed mixture comprising feed ingredients,
   b) combining the feed mixture with a binder system comprising calcium hydroxide, thereby obtaining an animal feed composition,
   c) subjecting the animal feed composition obtained in step b) to steam and heating the animal feed composition to a temperature of at least 80 °C,
   d) pelleting the mixture obtained in step c) to obtain animal feed pellets.
39. The method according to item 38, wherein in step c), the animal feed composition is heated to a temperature of at least 85 °C, preferably at least 88 °C, more preferably at least 90 °C, even more preferably at least 92 °C.
40. The method according to item 38 or 39, wherein in step c), the animal feed composition is heated to a temperature of 80 to 120 °C, preferably 85 to 120 °C, more preferably, 88 to 120 °C, even more preferably 90 to 120 °C, even more preferably 90 to 110 °C, even more preferably 92 to 110 °C, even more preferably 92 to 105 °C, even more preferably 92 to 100 °C.
41. The method according to item 38 or 39, wherein in step c), the animal feed composition is heated to a temperature of 88 to 100 °C, preferably 90 to 100 °C.
42. The method according to any one of items 38-41, wherein step c) is performed for a duration of at least 10 s, preferably at least 15 s, more preferably at least 60 s.
43. The method according to any one of items 38-42, wherein step c) is performed for a duration of 5-400 s, preferably 15-200 s, more preferably 60-120 s.
44. The method according to any one of items 38-43, wherein the animal feed composition obtained in step c) has a water content of 11-21 wt.%, preferably 13-19 wt.%, more preferably 16.2-18.2 wt.%, based on the weight of the feed composition obtained in step c).
45. The method according to any one of items 38-44, further comprising step e), wherein step e) is performed after step d), and wherein step e) comprises heating the pellets at a temperature of at least 90 °C, preferably at least 100 °C, more preferably at least 110 °C, more preferably at least 120 °C, more preferably at least 125 °C, more preferably at least 130 °C.
46. The method according to item 45, wherein step e) comprises heating the pellets at a temperature of 90 to 160 °C, preferably 100 to 150 °C, more preferably 110 to 150 °C, more preferably 110 to 140 °C, more preferably 120 to 140 °C, more preferably 125 to 145 °C.
47. The method according to item 45 or 46, wherein step e) comprises heating the pellets for a duration of 5 minutes to 5 hours, preferably 10 minutes to 4 hours, more preferably 10 minutes to 3 hours, more preferably 10 minutes to 2 hours, more preferably 10 minutes to 1 hour, more preferably 10 to 40 minutes, more preferably 20 to 40 minutes.
48. The method according to any one of items 45-47, wherein step e) comprises heating the pellets at a temperature of 125 to 145 °C and for a duration of 10 to 40 minutes.
49. The method according to any one of items 45-48, wherein step e) is performed at atmospheric pressure.
50. The method according to any one of items 45-49, wherein step e) comprises heating the pellets at a temperature and time sufficient to achieve a water content of less than 13%, preferably less than 12%, more preferably less than 10%.
51. The method according to any one of items 45-50, wherein no cooling step is performed between steps d) and e).
52. The method according to any one of items 45-51, wherein the pellets are not cooled to room temperature (20 °C) between steps d) and e).
53. The method according to any one of items 36-52, wherein the animal feed pellets have a water content of 7-15 wt.%, preferably 9-13 wt.%, more preferably 10-12 wt.%, based on the total weight of the animal feed pellets.
54. The method according to any one of items 36-53, wherein the animal feed pellets are aquatic animal feed pellets.
55. The method according to any one of items 38-54, wherein in step b) the calcium hydroxide is used in an amount of more than 0.3 wt.% to 2.5 wt.%, more preferably in an amount of more than 0.3 wt.% to 2.0 wt.%, more preferably in an amount of more than 0.3 wt.% to 1.5 wt.%, more preferably in an amount of more than 0.3 wt.% to 1.2 wt.%, more preferably in an amount of more than 0.3 wt.% to 1.0 wt.%, based on the total weight of the feed mixture and the binder system.
56. The method according to any one of items 38-55, wherein in step b) the calcium hydroxide is present in an amount of 0.4 to 2.5 wt.%, based on the total weight of the feed mixture and the binder system, preferably in an amount of 0.4 to 2.0 wt.%, more preferably in an amount of 0.4 to 1.5 wt.%, more preferably in an amount of 0.4 to 1.2 wt.%, more preferably in an amount of 0.4 to 1.0 wt.%.
57. The method according to any one of items 38-56, wherein in step b) the calcium hydroxide is present in an amount of 0.9 to 2.5 wt.%, preferably 0.9 to 2.0 wt.%, more preferably 0.9 to 1.5 wt.%, more preferably 0.9 to 1.2 wt.%, more preferably 0.9 to 1.0 wt.%.
58. The method according to any one of items 38-57, wherein the amount of calcium hydroxide in the final animal feed pellets is more than 0.3 wt.% to 2.5 wt.%, more preferably more than 0.3 wt.% to 2.0 wt.%, more preferably more than 0.3 wt.% to 1.5 wt.%, more preferably more than 0.3 wt.% to 1.2 wt.%, more preferably more than 0.3 wt.% to 1.0 wt.%, based on the total weight of the animal feed pellets.
59. The method according to any one of items 38-58, wherein the amount of calcium hydroxide in the final animal feed pellets is 0.4 to 2.5 wt.%, based on the total weight of the animal feed pellets, preferably 0.4 to 2.0 wt.%, more preferably 0.4 to 1.5 wt.%, more preferably 0.4 to 1.2 wt.%, more preferably 0.4 to 1.0 wt.%.
60. The method according to any one of items 38-59, wherein the amount of calcium hydroxide in the final animal feed pellets is 0.9 to 2.5 wt.%, based on the total weight of the animal feed pellets, preferably 0.9 to 2.0 wt.%, more preferably 0.9 to 1.5 wt.%, more preferably 0.9 to 1.2 wt.%, more preferably 0.9 to 1.0 wt.%.
61. The method according to any one of items 38-60, wherein the binder system further comprises lignosulfonate and/or magnesium hydroxide and/or magnesium oxide, preferably the binder system further comprises lignosulfonate.
62. The method according to any one of items 38-60, wherein the binder system consists of calcium hydroxide.
63. The method according to any one of items 36-62, wherein the animal feed pellets have a water stability of 70% or more, preferably 75% or more, more preferably 80% or more, even more preferably 85% or more, even more preferably 87% or more, even more preferably 88% or more, even more preferably 90% or more, wherein the water stability is determined as set out in the description.
64. The method according to any one of items 38-63, wherein the pelleting step d) is performed at a temperature of at least 85 °C, preferably at least 90 °C.
65. The method according to any one of items 38-64, wherein the pelleting step d) is performed at a temperature of 80 to 120 °C, preferably 80 to 110 °C, more preferably, 85 to 105 °C, more preferably 90 to 100 °C, more preferably 90 to 97 °C, more preferably 93 to 95 °C.
66. The method according to any one of items 38-65, wherein the pelleting step d) is performed at a pressure of at least 1 atm, preferably at least 2 atm, more preferably at least 3 atm.
67. The method according to any one of items 38-66, wherein no other step is performed between steps c) and d).
68. The method according to any one of items 36-67, wherein the calcium hydroxide is used in solid form.
69. The method according to any one of items 36-67, wherein the calcium hydroxide is used in the form of a liquid slurry.
70. The method according to item 68, wherein the calcium hydroxide is used in the form of granules.
71. The method according to any one of items 38-70, wherein the feed mixture and the binder system do not comprise phosphoric acid, ammonium polyphosphate, monoammonium phosphate, diammonium phosphate, monopotassium phosphate, dipotassium phosphate, monosodium phosphate, monocalcium phosphate, disodium phosphate, or combinations thereof.
72. The method according to any one of items 36-71, wherein no corn syrup solids are used.
73. Method for increasing the water stability of animal feed pellets, the method comprising the use of calcium hydroxide.
74. The method according to claim 73, wherein the water stability is increased by at least 2%, preferably at least 6%, more preferably at least 10% as compared to identical animal feed pellets that do not comprise calcium hydroxide.
75. The method according to item 73 or 74, wherein the method comprises manufacturing the animal feed pellets by a method comprising the steps a) to d):
   a) providing a feed mixture comprising feed ingredients,
   b) combining the feed mixture with a binder system comprising calcium hydroxide, thereby obtaining an animal feed composition,
   c) subjecting the animal feed composition obtained in step b) to steam and heating the animal feed composition to a temperature of at least 80 °C,
   d) pelleting the mixture obtained in step c) to obtain animal feed pellets.
76. The method according to item 75, wherein in step c), the animal feed composition is heated to a temperature of at least 85 °C, preferably at least 88 °C, more preferably at least 90 °C, even more preferably at least 92 °C.
77. The method according to item 75 or 76, wherein in step c), the animal feed composition is heated to a temperature of 80 to 120 °C, preferably 85 to 120 °C, more preferably, 88 to 120 °C, even more preferably 90 to 120 °C, even more preferably 90 to 110 °C, even more preferably 92 to 110 °C, even more preferably 92 to 105 °C, even more preferably 92 to 100 °C.
78. The method according to item 75 or 76, wherein in step c), the animal feed composition is heated to a temperature of 88 to 100 °C, preferably 90 to 100 °C.
79. The method according to any one of items 75-78, wherein step c) is performed for a duration of at least 10 s, preferably at least 15 s, more preferably at least 60 s.
80. The method according to any one of items 75-79, wherein step c) is performed for a duration of 5-400 s, preferably 15-200 s, more preferably 60-120 s.
81. The method according to any one of items 75-80, wherein the animal feed composition obtained in step c) has a water content of 11-21 wt.%, preferably 13-19 wt.%, more preferably 16.2-18.2 wt.%, based on the weight of the feed composition obtained in step c).
82. The method according to any one of items 75-81, further comprising step e), wherein step e) is performed after step d), and wherein step e) comprises heating the pellets at a temperature of at least 90 °C, preferably at least 100 °C, more preferably at least 110 °C, more preferably at least 120 °C, more preferably at least 125 °C, more preferably at least 130 °C.
83. The method according to item 82, wherein step e) comprises heating the pellets at a temperature of 90 to 160 °C, preferably 100 to 150 °C, more preferably 110 to 150 °C, more preferably 110 to 140 °C, more preferably 120 to 140 °C, more preferably 125 to 145 °C.
84. The method according to item 82 or 83, wherein step e) comprises heating the pellets for a duration of 5 minutes to 5 hours, preferably 10 minutes to 4 hours, more preferably 10 minutes to 3 hours, more preferably 10 minutes to 2 hours, more preferably 10 minutes to 1 hour, more preferably 10 to 40 minutes, more preferably 20 to 40 minutes.
85. The method according to any one of items 82-84, wherein step e) comprises heating the pellets at a temperature of 125 to 145 °C and for a duration of 10 to 40 minutes.
86. The method according to any one of items 82-85, wherein step e) is performed at atmospheric pressure.
87. The method according to any one of items 82-86, wherein step e) comprises heating the pellets at a temperature and time sufficient to achieve a water content of less than 13%, preferably less than 12%, more preferably less than 10%.
88. The method according to any one of items 82-87, wherein no cooling step is performed between steps d) and e).
89. The method according to any one of items 82-88, wherein the pellets are not cooled to room temperature (20 °C) between steps d) and e).
90. The method according to any one of items 73-89, wherein the animal feed pellets have a water content of 7-15 wt.%, preferably 9-13 wt.%, more preferably 10-12 wt.%, based on the total weight of the animal feed pellets.
91. The method according to any one of items 73-90, wherein the animal feed pellets are aquatic animal feed pellets.
92. The method according to any one of items 75-91, wherein in step b) the calcium hydroxide is used in an amount of more than 0.3 wt.% to 2.5 wt.%, more preferably in an amount of more than 0.3 wt.% to 2.0 wt.%, more preferably in an amount of more than 0.3 wt.% to 1.5 wt.%, more preferably in an amount of more than 0.3 wt.% to 1.2 wt.%, more preferably in an amount of more than 0.3 wt.% to 1.0 wt.%, based on the total weight of the feed mixture and the binder system.
93. The method according to any one of items 75-92, wherein in step b) the calcium hydroxide is present in an amount of 0.4 to 2.5 wt.%, based on the total weight of the feed mixture and the binder system, preferably in an amount of 0.4 to 2.0 wt.%, more preferably in an amount of 0.4 to 1.5 wt.%, more preferably in an amount of 0.4 to 1.2 wt.%, more preferably in an amount of 0.4 to 1.0 wt.%.
94. The method according to any one of items 75-93, wherein in step b) the calcium hydroxide is present in an amount of 0.9 to 2.5 wt.%, preferably 0.9 to 2.0 wt.%, more preferably 0.9 to 1.5 wt.%, more preferably 0.9 to 1.2 wt.%, more preferably 0.9 to 1.0 wt.%.
95. The method according to any one of items 75-94, wherein the amount of calcium hydroxide in the final animal feed pellets is more than 0.3 wt.% to 2.5 wt.%, more preferably more than 0.3 wt.% to 2.0 wt.%, more preferably more than 0.3 wt.% to 1.5 wt.%, more preferably more than 0.3 wt.% to 1.2 wt.%, more preferably more than 0.3 wt.% to 1.0 wt.%, based on the total weight of the animal feed pellets.
96. The method according to any one of items 75-95, wherein the amount of calcium hydroxide in the final animal feed pellets is 0.4 to 2.5 wt.%, based on the total weight of the animal feed pellets, preferably 0.4 to 2.0 wt.%, more preferably 0.4 to 1.5 wt.%, more preferably 0.4 to 1.2 wt.%, more preferably 0.4 to 1.0 wt.%.
97. The method according to any one of items 75-96, wherein the amount of calcium hydroxide in the final animal feed pellets is 0.9 to 2.5 wt.%, based on the total weight of the animal feed pellets, preferably 0.9 to 2.0 wt.%, more preferably 0.9 to 1.5 wt.%, more preferably 0.9 to 1.2 wt.%, more preferably 0.9 to 1.0 wt.%.
98. The method according to any one of items 75-97, wherein the binder system further comprises lignosulfonate and/or magnesium hydroxide and/or magnesium oxide, preferably the binder system further comprises lignosulfonate.
99. The method according to any one of items 75-97, wherein the binder system consists of calcium hydroxide.
100. The method according to any one of items 73-99, wherein the animal feed pellets have a water stability of 70% or more, preferably 75% or more, more preferably 80% or more, even more preferably 85% or more, even more preferably 87% or more, even more preferably 88% or more, even more preferably 90% or more, wherein the water stability is determined as set out in the description.
101. The method according to any one of items 75-100, wherein the pelleting step d) is performed at a temperature of at least 85 °C, preferably at least 90 °C.
102. The method according to any one of items 75-101, wherein the pelleting step d) is performed at a temperature of 80 to 120 °C, preferably 80 to 110 °C, more preferably, 85 to 105 °C, more preferably 90 to 100 °C, more preferably 90 to 97 °C, more preferably 93 to 95 °C.
103. The method according to any one of items 75-102, wherein the pelleting step d) is performed at a pressure of at least 1 atm, preferably at least 2 atm, more preferably at least 3 atm.
104. The method according to any one of items 75-103, wherein no other step is performed between steps c) and d).
105. The method according to any one of items 73-104, wherein the calcium hydroxide is used in solid form.
106. The method according to any one of items 73-105, wherein the calcium hydroxide is used in the form of a liquid slurry.
107. The method according to item 105, wherein the calcium hydroxide is used in the form of granules.
108. The method according to any one of items 75-107, wherein the feed mixture and the binder system do not comprise phosphoric acid, ammonium polyphosphate, monoammonium phosphate, diammonium phosphate, monopotassium phosphate, dipotassium phosphate, monosodium phosphate, monocalcium phosphate, disodium phosphate, or combinations thereof.
109. The method according to any one of items 73-108, wherein no corn syrup solids are used.
110. Use of calcium hydroxide for reducing the energy consumption during a pelleting step in the manufacture of animal feed pellets.
111. Use of calcium hydroxide for increasing the water stability of animal feed pellets.
112. The use according to item 110 or 111, wherein the calcium hydroxide is used in a process, comprising the following steps:
   a) providing a feed mixture comprising feed ingredients,
   b) combining the feed mixture with a binder system comprising calcium hydroxide, thereby obtaining an animal feed composition,
   c) subjecting the animal feed composition obtained in step b) to steam and heating the animal feed composition to a temperature of at least 80 °C,
   d) pelleting the mixture obtained in step c).
113. The use according to item 112, wherein in step c), the animal feed composition is heated to a temperature of at least 85 °C, preferably at least 88 °C, more preferably at least 90 °C, even more preferably at least 92 °C.
114. The use according to item 112 or 113, wherein in step c), the animal feed composition is heated to a temperature of 80 to 120 °C, preferably 85 to 120 °C, more preferably, 88 to 120 °C, even more preferably 90 to 120 °C, even more preferably 90 to 110 °C, even more preferably 92 to 110 °C, even more preferably 92 to 105 °C, even more preferably 92 to 100 °C.
115. The use according to item 112 or 113, wherein in step c), the animal feed composition is heated to a temperature of 88 to 100 °C, preferably 90 to 100 °C.
116. The use according to any one of items 112-115, wherein step c) is performed for a duration of at least 10 s, preferably at least 15 s, more preferably at least 60 s.
117. The use according to any one of items 112-116, wherein step c) is performed for a duration of 5-400 s, preferably 15-200 s, more preferably 60-120 s.
118. The use according to any one of items 112-117, wherein the animal feed composition obtained in step c) has a water content of 11-21 wt.%, preferably 13-19 wt.%, more preferably 16.2-18.2 wt.%, based on the weight of the feed composition obtained in step c).
119. The use according to any one of items 112-118, further comprising step e), wherein step e) is performed after step d), and wherein step e) comprises heating the pellets at a temperature of at least 90 °C, preferably at least 100 °C, more preferably at least 110 °C, more preferably at least 120 °C, more preferably at least 125 °C, more preferably at least 130 °C.
120. The use according to item 119, wherein step e) comprises heating the pellets at a temperature of 90 to 160 °C, preferably 100 to 150 °C, more preferably 110 to 150 °C, more preferably 110 to 140 °C, more preferably 120 to 140 °C, more preferably 125 to 145 °C.
121. The use according to item 119 or 120, wherein step e) comprises heating the pellets for a duration of 5 minutes to 5 hours, preferably 10 minutes to 4 hours, more preferably 10 minutes to 3 hours, more preferably 10 minutes to 2 hours, more preferably 10 minutes to 1 hour, more preferably 10 to 40 minutes, more preferably 20 to 40 minutes.
122. The use according to any one of items 119-121, wherein step e) comprises heating the pellets at a temperature of 125 to 145 °C and for a duration of 10 to 40 minutes.
123. The use according to any one of items 119-122, wherein step e) is performed at atmospheric pressure.
124. The use according to any one of items 119-123, wherein step e) comprises heating the pellets at a temperature and time sufficient to achieve a water content of less than 13%, preferably less than 12%, more preferably less than 10%.
125. The use according to any one of items 119-124, wherein no cooling step is performed between steps d) and e).
126. The use according to any one of items 119-125, wherein the pellets are not cooled to room temperature (20 °C) between steps d) and e).
127. The use according to any one of items 119-126, wherein the animal feed pellets have a water content of 7-15 wt.%, preferably 9-13 wt.%, more preferably 10-12 wt.%, based on the total weight of the animal feed pellets.
128. The use according to any one of items 119-127, wherein the animal feed pellets are aquatic animal feed pellets.
129. The use according to any one of items 112-128, wherein in step b) the calcium hydroxide is used in an amount of more than 0.3 wt.% to 2.5 wt.%, more preferably in an amount of more than 0.3 wt.% to 2.0 wt.%, more preferably in an amount of more than 0.3 wt.% to 1.5 wt.%, more preferably in an amount of more than 0.3 wt.% to 1.2 wt.%, more preferably in an amount of more than 0.3 wt.% to 1.0 wt.%, based on the total weight of the feed mixture and the binder system.
130. The use according to any one of items 112-129, wherein in step b) the calcium hydroxide is present in an amount of 0.4 to 2.5 wt.%, based on the total weight of the feed mixture and the binder system, preferably in an amount of 0.4 to 2.0 wt.%, more preferably in an amount of 0.4 to 1.5 wt.%, more preferably in an amount of 0.4 to 1.2 wt.%, more preferably in an amount of 0.4 to 1.0 wt.%.
131. The use according to any one of items 112-130, wherein in step b) the calcium hydroxide is present in an amount of 0.9 to 2.5 wt.%, preferably 0.9 to 2.0 wt.%, more preferably 0.9 to 1.5 wt.%, more preferably 0.9 to 1.2 wt.%, more preferably 0.9 to 1.0 wt.%.
132. The use according to any one of items 112-131, wherein the amount of calcium hydroxide in the final animal feed pellets is more than 0.3 wt.% to 2.5 wt.%, more preferably more than 0.3 wt.% to 2.0 wt.%, more preferably more than 0.3 wt.% to 1.5 wt.%, more preferably more than 0.3 wt.% to 1.2 wt.%, more preferably more than 0.3 wt.% to 1.0 wt.%, based on the total weight of the animal feed pellets.
133. The use according to any one of items 112-132, wherein the amount of calcium hydroxide in the final animal feed pellets is 0.4 to 2.5 wt.%, based on the total weight of the animal feed pellets, preferably 0.4 to 2.0 wt.%, more preferably 0.4 to 1.5 wt.%, more preferably 0.4 to 1.2 wt.%, more preferably 0.4 to 1.0 wt.%.
134. The use according to any one of items 112-133, wherein the amount of calcium hydroxide in the final animal feed pellets is 0.9 to 2.5 wt.%, based on the total weight of the animal feed pellets, preferably 0.9 to 2.0 wt.%, more preferably 0.9 to 1.5 wt.%, more preferably 0.9 to 1.2 wt.%, more preferably 0.9 to 1.0 wt.%.
135. The use according to any one of items 112-134, wherein the binder system further comprises lignosulfonate and/or magnesium hydroxide and/or magnesium oxide, preferably the binder system further comprises lignosulfonate.
136. The use according to any one of items 112-134, wherein the binder system consists of calcium hydroxide.
137. The use according to any one of items 110-136, wherein the animal feed pellets have a water stability of 70% or more, preferably 75% or more, more preferably 80% or more, even more preferably 85% or more, even more preferably 87% or more, even more preferably 88% or more, even more preferably 90% or more, wherein the water stability is determined as set out in the description.
138. The use according to any one of items 112-137, wherein the pelleting step d) is performed at a temperature of at least 85 °C, preferably at least 90 °C.
139. The use according to any one of items 112-138, wherein the pelleting step d) is performed at a temperature of 80 to 120 °C, preferably 80 to 110 °C, more preferably, 85 to 105 °C, more preferably 90 to 100 °C, more preferably 90 to 97 °C, more preferably 93 to 95 °C.
140. The use according to any one of items 112-139, wherein the pelleting step d) is performed at a pressure of at least 1 atm, preferably at least 2 atm, more preferably at least 3 atm.
141. The use according to any one of items 112-140, wherein no other step is performed between steps c) and d).
142. The use according to any one of items 110-141, wherein the calcium hydroxide is used in solid form.
143. The use according to any one of items 110-141, wherein the calcium hydroxide is used in the form of a liquid slurry.
144. The use according to item 142, wherein the calcium hydroxide is used in the form of granules.
145. The use according to any one of items 112-144, wherein the feed mixture and the binder system do not comprise phosphoric acid, ammonium polyphosphate, monoammonium phosphate, diammonium phosphate, monopotassium phosphate, dipotassium phosphate, monosodium phosphate, monocalcium phosphate, disodium phosphate, or combinations thereof.
146. The use according to any one of items 110-145, wherein no corn syrup solids are used.
147. Animal feed pellets, obtained by the process according to any one of items 1 to 35.
148. Animal feed pellets, comprising
   a) feed ingredients, and
   b) a binder system comprising calcium hydroxide.
149. The animal feed pellets according to item 148, wherein the animal feed pellets have a water content of 7-15 wt.%, preferably 9-13 wt.%, more preferably 10-12 wt.%, based on the total weight of the animal feed pellets.
150. The animal feed pellets according to any one of item 148 or 149, wherein the animal feed pellets are aquatic animal feed pellets.
151. The animal feed pellets according to any one of items 148-150, wherein the binder system further comprises lignosulfonate and/or magnesium hydroxide and/or magnesium oxide, preferably the binder system further comprises lignosulfonate.
152. The animal feed pellets according to any one of items 148-150, wherein the binder system consists of calcium hydroxide.
153. The animal feed pellets according to any one of items 148-152, wherein the animal feed pellets have a water stability of 70% or more, preferably 75% or more, more preferably 80% or more, even more preferably 85% or more, even more preferably 87% or more, even more preferably 88% or more, even more preferably 90% or more, wherein the water stability is determined as set out in the description.
154. The animal feed pellets according to any one of items 148-153, characterized in that it does not comprise corn syrup solids.
155. The animal feed pellets according to any one of items 148-154, wherein the amount of calcium hydroxide in the animal feed pellets is more than 0.3 wt.% to 2.5 wt.%, more preferably more than 0.3 wt.% to 2.0 wt.%, more preferably more than 0.3 wt.% to 1.5 wt.%, more preferably more than 0.3 wt.% to 1.2 wt.%, more preferably more than 0.3 wt.% to 1.0 wt.%, based on the total weight of the animal feed pellets.
156. The animal feed pellets according to any one of items 148-155, wherein the amount of calcium hydroxide in the animal feed pellets is 0.4 to 2.5 wt.%, based on the total weight of the animal feed pellets, preferably 0.4 to 2.0 wt.%, more preferably 0.4 to 1.5 wt.%, more preferably 0.4 to 1.2 wt.%, more preferably 0.4 to 1.0 wt.%.
157. The animal feed pellets according to any one of items 148-156, wherein the amount of calcium hydroxide in the animal feed pellets is 0.9 to 2.5 wt.%, based on the total weight of the animal feed pellets, preferably 0.9 to 2.0 wt.%, more preferably 0.9 to 1.5 wt.%, more preferably 0.9 to 1.2 wt.%, more preferably 0.9 to 1.0 wt.%.

### EXAMPLES

Several different pellet trials were conducted for establishing the role of calcium hydroxide and lignosulfonate in water-stable animal feed pellets and for analyzing the role of calcium hydroxide and lignosulfonate as a binder and a processing aid.

In all experiments, the feed mixture was composed of 40 wt.% wheat, 40 wt.% soy meal and 20 wt.% fish meal (69.8% protein, 7.8% fat).

Pellets were produced using a Münch Edelstahl Lab Pellet Press (RMP 250/250). After an initial stabilization phase where the equipment reaches set process parameters, the feed compositions comprising the feed mixture (40:40:20) and different binder compositions were contacted with steam in the pre-conditioner (steam pressure 2-6 bar) (thereby increasing the temperature and moisture of the feed composition) and the pre-conditioned feed mixture was then pressed through a die (3.4 x 45 mm) (meal temperature at the die exit: 90-95 °C).

For analyzing the role of calcium hydroxide and lignosulfonate as a processing aid for lowering the energy consumption during the pelleting process, the AC-current was monitored during the process.

The water stability of the non-heated pellets was determined after cooling down the freshly formed pellets in a fan oven for 15 minutes (room temperature). Another portion of the pellets was heat treated for 30 minutes at 130 °C, followed by cooling the pellets down in a fan oven for 15 minutes (room temperature). The post-pelletization heating was performed by using a standard laboratory drying oven (Termaks). The cooling step was performed by using a cabinet equipped with fans.

Water-stability was determined according to the following protocol: 10.0 g of a feed pellet having a known dry matter (DM) content was placed in a 250 mL (Blue Cap Schott-Duran) flask. To this flask was added 100 g of tap water (20°C). The entire flask was placed in a horizontal shaker (50 min⁻¹) for 2 hours. After the shaking sequence, the remaining pellets were sieved (i.e., filtered) through a SS-metal basket with Ø3 mm holes. The pellets were then repeatedly dipped into water 10 times to rinse off any remaining fines. After the rinsing procedure, pellets were transferred to an aluminum pan and dried at 105 °C over-night (18-24h). After drying, the pellets were allowed to cool down in a desiccator to room temperature (20°C) and subsequently weighed to determine the remaining dry matter.

Pellet durability was determined according to the following protocol: The durability of the pellets produced in these trails were measured pneumatically using a Holmen NHP 100 Portable Pellet Tester. 100 g of screened and dry pellets were cascaded inside a test chamber by high velocity air (70 mbar) for 30, 60, 90 or 120 seconds. After this time the pellets were screened (automatically) and subsequently weighed. The percentage of whole pellets remaining represented the durability value (also referred to as pellet durability index, PDI).

### Results

### Water Stability

The following binders were tested for their effect on the water stability of the resulting pellets:

**Table 1: Samples for analyzing effect of calcium hydroxide on water stability**

| **Binder sample** | **Binder composition** | **Amount of Ca(OH)₂** |
|---|---|---|
| 0 (comparative) | Lignosulfonate (1 wt.%) | 0.0 wt% |
| 00 (comparative) | PellTech^{®} (0.25 wt.%) | 0.0 wt% |
| 1 | Ca(OH)₂ (1.0 wt.%) | 1.0 wt.% |
| 2 | Ca(OH)₂ (0.8 wt.%) + lignosulfonate (0.2 wt.%) | 0.8 wt.% |
| 3 | Ca(OH)₂ (0.2 wt.%) + lignosulfonate (0.8 wt.%) | 0.2 wt.% |
| 4 (comparative) | Urea formaldehyde (0.5 wt.%) | 0.0 wt% |

The results are summarized in Table 2:

**Table 2: Summary of water-stability of pellets prepared with binders of Table 1.**

| **Example** | **Binder sample** | **Preconditioner temperature [°C]** | **Water stability** | **Water stability** |
|---|---|---|---|---|
| | | | **[dry matter remaining; %]** | **[dry matter remaining; %]** |
| | | | **(not heated after pelletization)** | **(heated after pelletization; 130 °C, 2 h)** |
| **WS-0** | 0 (comparative) | 94.7 | - | - |
| **WS-00** | 00 (comparative) | 94.7 | 82 | 87 |
| **WS-1** | 1 | 94.8 | 88 | 91 |
| **WS-2** | 2 | 94.0 | 86 | 90 |
| **WS-3** | 3 | 95.2 | 78 | 90 |
| **WS-4** | 4 (comparative) | 95.4 | 90 | 91 |

The following results were obtained:
The pellet forming process in comparative example WS-0 using 1 wt.% lignosulfonate, did not work and no pellet was produced.

Visually, the pellets were very similar after the pellet forming process, for the other examples, regardless of the binder added.

Further, it was observed that a post-pelleting heating step [step e) described hereinabove] improves the water-stability of all samples.

Further, as a general trend, it was observed that the binders comprising a higher amount of Ca(OH)₂ resulted in a higher water stability after pelletization. However, samples prepared with a relatively high amount of Ca(OH)₂ and having a relatively high water stability already after pelletization showed only a moderate increase in water stability upon heat treatment. The increase in water stability upon heat treatment was higher for the lignosulfonate-containing binders. The water stability after heat treatment was very similar for binder samples 1, 2, and 3. Thus, a lower water stability after pelletization can be corrected for by using a post-pelleting heating step.

Further, after heat treatment, all pellets had a water-stability very similar to the water-stability achieved with the prior art urea formaldehyde binder.

Further, it was observed that the pellets prepared with comparative binder sample 00 (PellTech^{®} (0.25 wt.%)) had a lower water stability after heating than the other samples and also had a different appearance compared to all other pellets after the water stability measurement. In particular, after the water stability measurement, the pellets prepared with comparative binder sample 00 showed more cracks and were less uniform than all other pellets.

Further, the use of Ca(OH)₂ alone (i.e. in the absence of lignosulfonate) led to a small but noticeable degree of unevenness in the pelleting process. When lignosulfonate was added to the Ca(OH)₂ binder, a more efficient pelleting process resulted.

### Effect on the energy consumption during pelletization

The following binders were tested for their effect on the energy consumption during pelletization:

**Table 3: Samples for analyzing effect on energy consumption**

| **Binder sample** | **Binder composition** | **Amount of Ca(OH)₂** |
|---|---|---|
| 0 (comparative) | Lignosulfonate (1 wt.%) | 0.0 wt% |
| 00 (comparative) | PellTech^{®} (0.25 wt.%) | 0.0 wt% |
| A | Ca(OH)₂ (1.0 wt.%) | 1.0 wt.% |
| B | Ca(OH)₂ (0.5 wt.%) | 0.5 wt.% |
| C | Ca(OH)₂ (0.3 wt.%) | 0.3 wt.% |
| D (comparative) | urea formaldehyde (0.5 wt.%) | 0.0 wt% |

The results are summarized in Table 4:

**Table 4: Summary of energy consumption during pelletization**

| **Example** | **Binder sample** | **Pre-conditioner temperature** | **AC current** |
|---|---|---|---|
| **EC-0** | 0 | 94.7 °C | - |
| **EC-00** | 00 | 94.7 °C | 16.0 A |
| **EC-1** | A | 88.5 °C | 12.9 A |
| **EC-2** | B | 90.0 °C | 13.2 A |
| **EC-3** | C | 89.5 °C | 14.1 A |
| **EC-4** | D | 91.5 °C | 15.1 A |

The following results were obtained:
The pellet forming process in comparative example EC-0 using 1 wt.% lignosulfonate, did not work and no pellet was produced.

During all other pellet trials, a significant effect on the energy consumption was consistently observed. Overall, by using calcium hydroxide as a binder, the energy-efficiency of the process could be improved relative to the urea formaldehyde binder and the PellTech^{®} binder.

When the inclusion level of calcium hydroxide was decreased from 1 wt.% (Example EC-1) to 0.5 wt.% (Example EC-2), in principle the same AC-current profile was observed, indicating that the loading of calcium hydroxide was sufficient to provide a steady and efficient pelleting process. When the amount of calcium hydroxide was further decreased to 0.3 wt.%, an increase in AC current was observed, indicating a higher energy consumption. Also, irregularities in the AC current were observed, indicating a less stable and less smooth process. Below 0.3 wt.%, an even higher and more irregular AC current was observed, indicating that 0.3 wt.% may be considered as the minimal required level of calcium hydroxide for achieving an energy-efficient and smooth pelleting process.

Further, as noted above, the addition of lignosulfonate to a Ca(OH)₂ binder resulted in a more efficient pelting process.

### Pellet durability

The following binders were tested for their effect on the pellet durability.

**Table 5: Samples for analyzing pellet durability**

| **Binder sample** | **Binder composition** | **Amount of Ca(OH)₂** |
|---|---|---|
| A | Ca(OH)₂ (1.0 wt.%) | 1.0 wt.% |
| B | Ca(OH)₂ (0.8 wt.%) + lignosulfonate (0.2 wt.%) | 0.8 wt.% |
| C | Ca(OH)₂ (0.5 wt.%) | 0.5 wt.% |
| D | Ca(OH)₂ (0.3 wt.%) | 0.3 wt.% |
| E | Ca(OH)₂ (0.2 wt.%) + lignosulfonate (0.8 wt.%) | 0.2 wt.% |
| F (comparative) | urea formaldehyde (0.5 wt.%) | 0.0 wt.% |

The results are summarized in Table 6:

**Table 6: Summary of pellet durability**

| **Ex.** | **Binder sample** | **Pre-conditioner temperature** | **PDI** | **PDI** |
|---|---|---|---|---|
| | | | **[%]** | **[%]** |
| | | | **(not heated after pelletization)** | **(heated after pelletization; 130 °C, 2 h)** |
| **PD-1** | A | 88.5 °C | 97.3 | 97.2 |
| **PD-2** | A | 94.8 °C | n.d. | 97.3 |
| **PD-3** | B | 94.0 °C | n.d. | 97.0 |
| **PD-4** | C | 90.0 °C | 97.4 | 97.5 |
| **PD-5** | D | 89.5 °C | 97.7 | 97.6 |
| **PD-6** | E | 95.2 °C | n.d. | 96.5 |
| **PD-7** | F | 91.5 °C | 97.7 | 98.0 |

All pellets displayed very good durability and comparable to that of the commercial ASB-binder.

## Claims

1. Process for the manufacture of animal feed pellets, the process comprising the following steps:
a) providing a feed mixture comprising feed ingredients,
b) combining the feed mixture with a binder system comprising calcium hydroxide, thereby obtaining an animal feed composition,
c) subjecting the animal feed composition obtained in step b) to steam and heating the animal feed composition to a temperature of at least 80 °C,
d) pelleting the mixture obtained in step c) to obtain animal feed pellets.

2. The process according to claim 1, wherein in step c), the animal feed composition is heated to a temperature of at least 85 °C, preferably at least 88 °C, more preferably at least 90 °C, even more preferably at least 92 °C.

3. The process according to claim 1 or 2, wherein in step c), the animal feed composition is heated to a temperature of 80 to 120 °C, preferably 85 to 120 °C, more preferably, 88 to 120 °C, even more preferably 90 to 120 °C, even more preferably 90 to 110 °C, even more preferably 92 to 110 °C, even more preferably 92 to 105 °C, even more preferably 92 to 100 °C.

4. The process according to claim 1 or 2, wherein in step c), the animal feed composition is heated to a temperature of 88 to 100 °C, preferably 90 to 100 °C.

5. The process according to any one of the preceding claims, further comprising step e), wherein step e) is performed after step d), and wherein step e) comprises heating the pellets at a temperature of at least 90 °C, preferably at least 100 °C, more preferably at least 110 °C, more preferably at least 120 °C, more preferably at least 125 °C, more preferably at least 130 °C.

6. The process according to claim 5, wherein step e) comprises heating the pellets at a temperature of 90 to 160 °C, preferably 100 to 150 °C, more preferably 110 to 150 °C, more preferably 110 to 140 °C, more preferably 120 to 140 °C, more preferably 125 to 145 °C.

7. The process according to claim 5 or 6, wherein step e) comprises heating the pellets for a duration of 5 minutes to 5 hours, preferably 10 minutes to 4 hours, more preferably 10 minutes to 3 hours, more preferably 10 minutes to 2 hours, more preferably 10 minutes to 1 hour, more preferably 10 to 40 minutes, more preferably 20 to 40 minutes.

8. The process according to any one of claims 5-7, wherein step e) comprises heating the pellets at a temperature of 125 to 145 °C and for a duration of 10 to 40 minutes.

9. The process according to any one of claims 5-8, wherein step e) is performed at atmospheric pressure.

10. The process according to any one of claims 5-9, wherein step e) comprises heating the pellets at a temperature and time sufficient to achieve a water content of less than 13%, preferably less than 12%, more preferably less than 10%.

11. The process according to any one of the preceding claims, wherein the binder system further comprises lignosulfonate and/or magnesium hydroxide and/or magnesium oxide, preferably the binder system further comprises lignosulfonate.

12. Method for reducing the energy consumption during a pelleting step in the manufacture of animal feed pellets, the method comprising the use of calcium hydroxide.

13. Method for increasing the water stability of animal feed pellets, the method comprising the use of calcium hydroxide.

14. Use of calcium hydroxide for reducing the energy consumption during a pelleting step in the manufacture of animal feed pellets.

15. Use of calcium hydroxide for increasing the water stability of animal feed pellets.

16. Animal feed pellets, obtained by the process according to any one of claims 1 to 10.

17. Animal feed pellets, comprising
a) feed ingredients, and
b) a binder system comprising calcium hydroxide.

18. The animal feed pellets according to claim 17, wherein the animal feed pellets have a water content of 7-15 wt.%, preferably 9-13 wt.%, more preferably 10-12 wt.%, based on the total weight of the animal feed pellets.

19. The animal feed pellets according to claim 17 or 18, wherein the animal feed pellets are aquatic animal feed pellets.

20. The animal feed pellets according to any one of claims 17-19, wherein the amount of calcium hydroxide in the animal feed pellets is more than 0.3 wt.% to 2.5 wt.%, more preferably more than 0.3 wt.% to 2.0 wt.%, more preferably more than 0.3 wt.% to 1.5 wt.%, more preferably more than 0.3 wt.% to 1.2 wt.%, more preferably more than 0.3 wt.% to 1.0 wt.%, based on the total weight of the animal feed pellets
